(19) Europäisches Patentamt / European Patent Office / Office européen des brevets

(11) **EP 3 605 892 B1**

(12) **EUROPEAN PATENT SPECIFICATION**

(45) Date of publication and mention
of the grant of the patent:
**26.02.2025  Bulletin 2025/09**

(21) Application number: **18770627.0**

(22) Date of filing: **19.01.2018**

(51) International Patent Classification (IPC):
**H04L 1/00** *(2006.01)*      **H04L 1/18** *(2023.01)*

(52) Cooperative Patent Classification (CPC):
**H04L 1/0026; H04L 1/0027;** H04L 1/1822

(86) International application number:
**PCT/CN2018/073503**

(87) International publication number:
**WO 2018/171320 (27.09.2018 Gazette 2018/39)**

(54) **INFORMATION TRANSMISSION METHOD AND DEVICE, AND STORAGE MEDIUM**

INFORMATIONSÜBERTRAGUNGSVERFAHREN UND -VORRICHTUNG UND SPEICHERMEDIUM

PROCÉDÉ ET DISPOSITIF DE TRANSMISSION D'INFORMATIONS, ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.03.2017   CN 201710184860**

(43) Date of publication of application:
**05.02.2020  Bulletin 2020/06**

(73) Proprietor: **ZTE Corporation
Shenzhen, Guangdong 518057 (CN)**

(72) Inventors:
• **SHI, Jing
Shenzhen
Guangdong 518057 (CN)**
• **XIA, Shuqiang
Shenzhen
Guangdong 518057 (CN)**
• **CHEN, Donglei
Shenzhen
Guangdong 518057 (CN)**
• **ZHANG, Wen
Shenzhen
Guangdong 518057 (CN)**
• **HAN, Xianghui
Shenzhen
Guangdong 518057 (CN)**

• **REN, Min
Shenzhen
Guangdong 518057 (CN)**

(74) Representative: **Wallinger Ricker Schlotter
Tostmann
Patent- und Rechtsanwälte mbB
Zweibrückenstraße 5-7
80331 München (DE)**

(56) References cited:
EP-A1- 2 587 707      WO-A2-2016/122386
CN-A- 105 050 195      CN-A- 106 209 299

• FUJITSU: "Scheduling and CQI feedback for URLLC", vol. RAN WG1, no. Reno, USA; 20161114 - 20161118, 13 November 2016 (2016-11-13), XP051175445, Retrieved from the Internet <URL:http://www.3gpp. org/ftp/Meetings_3GPP_SYNC/RAN1/Docs/> [retrieved on 20161113]
• FUJITSU: "Design of Efficient CQI Reports for High Reliability Transmission", 3GPP TSG RAN WG1 MEETING NR AD-HOC MEETING RL-1700657, 20 January 2017 (2017-01-20), XP051208181
• FUJITSU: "Design of Efficient CQI Reports for URLLC", 3GPP TSG RAN WG1 MEETING #88 RL-1703211, 17 February 2017 (2017-02-17), XP051210345

EP 3 605 892 B1

Description

## TECHNICAL FIELD

The present application relates to the field of communications and, in particular, to an information transmission method and device, and a storage medium.

## BACKGROUND

With the increasing improvement of the commercial use of the long-term evolution (LTE)/long-term evolution advance (LTE-Advance/LTE-A) system in the 4th Generation mobile communication technology (4G), the 5th Generation mobile communication technology (5G), as the related art of the present application, has higher requirements on technical indexes. The next-generation mobile communication system should have transmission features such as an ultra-high speed, an ultra-high capacity, ultra-high reliability, and ultra-low-latency. The index of the ultra-low latency and the ultra-high reliability in a 5G system currently includes the user plane latency of 1 ms and the reliability of 99.999 %.

In order to satisfy requirements on the ultra-low latency and the ultra-high reliability, a traditional manner is a Hybrid Automatic Repeat request (HARQ). However, the requirement on the ultra-low latency may not be satisfied due to multiple retransmissions. Therefore, the number of transmissions is limited under the condition that reliability is improved using the HARQ. Therefore, the reliability of a single information transmission is further to be improved, that is, a lower target block error rate (BLER) is needed.

If each transmission in a HARQ process is performed with a same lower target BLER, system spectral efficiency will be affected. Currently, there is a lack of a method for reporting channel quality indicators (CQI) corresponding to different target BLERs in the related art.

Further relevant technologies are also known from FUJITSU: "Scheduling and CQI feedback for URLLC", 3GPP DRAFT, XP051175445, 13 November 2016 (2016-11-13); and the EP 2 587 707 A1.

## SUMMARY

Embodiments of the present application provide an information transmission method and device, and a storage medium, to solve at least the problem of low system spectral efficiency due to transmissions at a same target BLER in the related art. The feature of the method and device according to the present invention are defined in the independent claims. Further improvements are provided in the dependent claims.

## BRIEF DESCRIPTION OF DRAWINGS

The drawings described herein are used to provide a further understanding of the present application and form a part of the present application. The exemplary embodiments and descriptions thereof in the present application are used to explain the present application and not to limit the present application in any improper way. In the drawings:

FIG. 1 is a flowchart of an information transmission method according to an embodiment of the present application;
FIG. 2 is a structural block diagram of an information transmission device according to an embodiment of the present application;
FIG. 3 is a schematic diagram illustrating periodic CSI reporting in which all of CQI reporting periods corresponding to different target BLERs are the same according to an embodiment of the present application;
FIG. 4 is a schematic diagram illustrating periodic CSI reporting in which CQI reporting periods corresponding to different target BLERs are not completely the same according to an embodiment of the present application;
FIG. 5 is a schematic diagram illustrating periodic CSI reporting in which CQI reporting periods corresponding to different target BLERs are independent from each other according to an embodiment of the present application;
FIG. 6 is a schematic diagram illustrating a mapping position next to a CQI according to an embodiment of the present application;
FIG. 7 is a schematic diagram illustrating mapping positions on two sides of a RI according to an embodiment of the present application; and
FIG. 8 is a schematic diagram illustrating mapping positions from a highest frequency domain position of a PUSCH in a manner of time domain followed by frequency domain according to an embodiment of the present application.

## DETAILED DESCRIPTION

The present application will be described hereinafter in detail through embodiments with reference to the drawings. It is to be noted that if not in collision, the embodiments and features therein in the present application may be combined with each other.

It is to be noted that the terms "first", "second" and the like in the description, claims and drawings of the present application are used to distinguish between similar objects and are not necessarily used to describe a particular order or sequence.

Embodiment 1

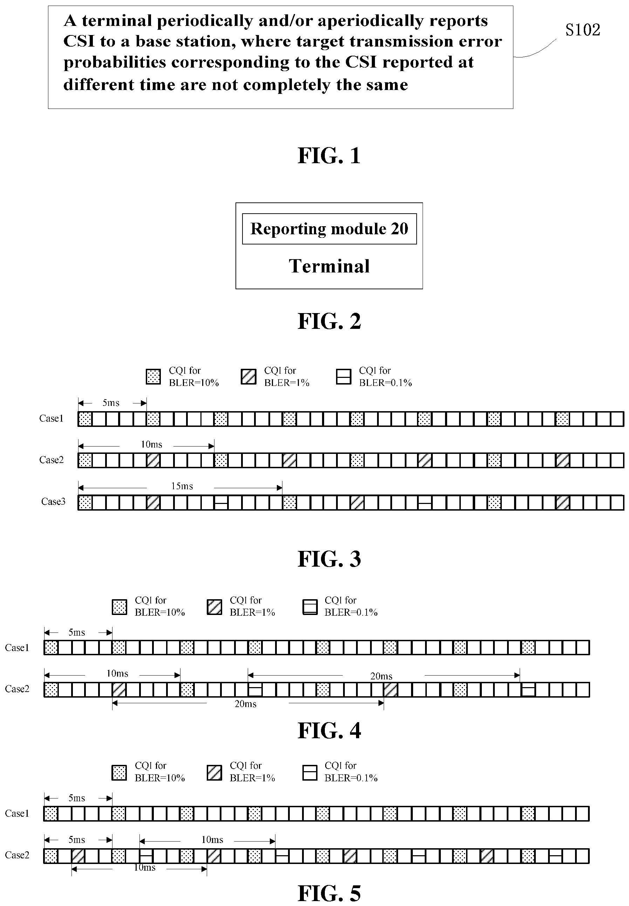

This embodiment provides an information transmission method. FIG. 1 is a flowchart of an information transmission method according to an embodiment of the present application. As shown in FIG. 1, the method includes steps described below.

In step S102, a terminal periodically and/or aperiodically reports a channel quality indicator (CQI) to a base station, where target transmission error probabilities corresponding to channel state information (CSI) reported at different time are not completely the same. A transmission error probability may be a block error rate (BLER), a bit error rate (BER), a symbol error rate and the like. In this embodiment, the BLER is taken as an example, and the CSI includes at least the CQI. The CQI is described as a preferred implementation in this embodiment. The CSI includes at least the CQI, and may further include a precoding matrix indicator (PMI), a rank indicator (RI) and the like.

According to the steps described above, the terminal periodically and/or aperiodically reports the channel state information (CSI) to the base station, where target transmission error probabilities corresponding to a CQI reported at different time are different, so that the CQI is reported periodically and/or aperiodically with different transmission densities flexibly. The terminal and the base station implement a HARQ according to a target BLER, ensuring that CQIs corresponding to different target BLERs may be flexibly determined in each downlink data transmission in the HARQ transmission process, improving system spectral efficiency, solving the problem of low system spectral efficiency due to transmission at a same target BLER in the related art.

Optionally, the above steps may, but may not necessarily, be executed by the terminal, such as a mobile phone.

On a base station side, this embodiment further provides an information transmission method. The method includes steps described below.

In S11, the base station receives the CSI periodically and/or aperiodically reported by the terminal, where the target transmission error probabilities corresponding to the CSI reported at the different time are not completely the same.

In S12, the base station indicates a target transmission error probability corresponding to the reported CSI to the terminal.

Specifically, the step in which the base station indicates the target transmission error probability corresponding to the reported CSI to the terminal includes at least one of steps described below. The base station indicates whether the terminal reports the CSI and the target transmission error probability corresponding to the reported CSI through jointly coding a trigger of aperiodic CSI and a value of a corresponding target transmission error probability in downlink control information (DCI).

The base station indicates the value of the corresponding target transmission error probability when the aperiodic CSI is triggered and the corresponding target transmission error probability when the terminal reports the aperiodic CSI through a bit field in the DCI or an information field in radio resource control (RRC).

The base station indicates the value of the corresponding target transmission error probability when the aperiodic CSI is triggered through 1 bit in the DCI, and indicates whether the corresponding target transmission error probability when the terminal reports the aperiodic CSI is a reference value or a lower target transmission error probability value, where the lower target transmission error probability value is less than a BELR equal to 10 % and is determined as one of: a fixed value, a predefined value, or a value configured via higher layer signaling. Optionally, in one branch of this embodiment, in condition that the terminal periodically reports the CQI to the base station, a manner for determining CQI transmission periods corresponding to different target BLERs includes at least one of manners described below.

The CQI transmission periods corresponding to the different target BLERs are independently configured and independently determined according to configurations.

The CQI transmission periods corresponding to the different target BLERs are uniformly configured and all of the CQI transmission periods are the same.

The CQI transmission periods corresponding to the different target BLERs are uniformly configured and the CQI transmission periods are not completely the same.

In an optional implementation of this embodiment, uniform configuring in which all of the CQI transmission periods corresponding to the different target BLERs are the same is implemented by the following manner: configuring a single period of $N_p$ to transmit CQIs corresponding to B kinds of target BLERs at a same period of $N_p$, where CQI reporting time corresponding to each kind of target BLERs has a different offset value of $N_{OFFSET,CQI,i}$, and B is a positive integer. Optionally, the offset value of $N_{OFFSET,CQI,i}$ is determined according to a configured offset value of $N_{OFFSET,CQI}$, the configured period of $N_p$ and a number of kinds of target transmission error probabilities B. Offset values for reporting CSI corresponding to different target transmission error probabilities are equally distributed in a single period of $N_p$, that is, an interval between offset values for reporting CSI corresponding to two different kinds of target transmission error probabilities is $\lfloor N_p / B \rfloor$. Specifically, the offset value of $N_{OFFSET,CQI,i}$ is obtained according to the following formula:

$$N_{OFFSET,CQI,i} = \left( N_{OFFSET,CQI} + i \cdot \lfloor N_p / B \rfloor \right) \bmod N_p ,$$

where $i = 0,1,...,B$-1.

In an optional implementation of this embodiment, the uniform configuring in which all of the CQI transmission periods corresponding to the different target BLERs are the same is implemented by a manner described below.

The period of $N_p$ is configured to transmit CSI corresponding to B kinds of target transmission error probabilities at a same period of $B \cdot N_p$, where CSI reporting time corresponding to each kind of target transmission error probability has a different offset value of $N_{OFFSET,CQI,i}$, and B is a positive integer. The same period is a multiple of the single period, specifically the same period is B times the single period.

Optionally, the offset value of $N_{OFFSET,CQI,i}$ is determined according to the configured offset value of $N_{OFFSET,CQI}$, the configured period of $N_p$ and the number of kinds of target transmission error probabilities B. The offset values for reporting the CSI corresponding to the different target transmission error probabilities are equally distributed in the period of $B \cdot N_P$, that is, the interval between offset values for reporting the CSI corresponding to the two different kinds of target transmission error probabilities is $N_p$. Specifically, the offset value of $N_{OFFSET,CQI,i}$ is obtained according to the following formula:

$$N_{OFFSET,CQI,i} = \left( N_{OFFSET,CQI} + i \cdot N_p \right) \bmod (B \cdot N_p) ,$$

where $i = 0,1,..,B$-1.

In an optional implementation of this embodiment, uniform configuring in which the CQI transmission periods corresponding to the different target BLERs are not completely the same is implemented by one of manners described below.

The single period of $N_p$ is configured to transmit the CQIs corresponding to the B kinds of target BLERs at different periods of $N_p/m_j$ where $m_j$ denotes a number of transmissions in the period of $N_p$ when an index of a target BLER is j, and $j = 1,2,...,B$.

I kinds of periods are uniformly configured to transmit CSI corresponding to $B_i$ kinds of target transmission error probabilities at a same period, where $B_i$ denotes a group of target transmission error probabilities to which CSI reported at the same period corresponds among the B different kinds of target transmission error probabilities, where $1 \leq i \leq I$, $1 \leq I \leq B$, $1 \leq B_i \leq B$, for each group $B_i$, the period of $N_p$ is configured to transmit the CSI corresponding to the $B_i$ kinds of target transmission error probabilities at a same period of $N_p$ or $B_i \cdot N_p$, and i and I are both positive integers. In condition that the period of $N_p$ is configured to transmit the CSI corresponding to the B kinds of target transmission error probabilities at the different periods $N_p/m_j$, offset values corresponding to the B kinds of target transmission error probabilities are determined according to the configured offset value of $N_{OFFFT,CQI}$, the configured period of $N_p$, and a sum M of numbers of transmissions of reported CSI corresponding to the B kinds of target transmission error probabilities in the period. The offset values corresponding to the different target transmission error probabilities are unequally distributed in the period of $B \cdot N_P$, and a minimum interval between offset values for reporting the CSI corresponding to the B kinds of target transmission error probabilities is $\lfloor N_p / M \rfloor$. Specifically, the offset value of $N_{OFFSET,CQI,i}$ is calculated according to the following formula:

$$N_{OFFSET,CQI,i} = \left( N_{OFFSET,CQI} + i \cdot \lfloor N_p / M \rfloor \right) \bmod N_p .$$

where M denotes the sum of numbers of transmissions of reported CSI corresponding to the B kinds of target BLERs in the period of $N_p$, $M \geq B$, $i = 0,1,...,M$-1, and a value of i corresponding to $m_j$ is predefined or configured by the base station.

Optionally, in another branch of this embodiment, in condition that the terminal aperiodically reports the CQI to the base station, a manner for determining a target BLER corresponding to the CQI includes an explicit or implicit manner and specifically includes manners described below. The base station explicitly indicates the target BLER corresponding to the reported CQI.

The terminal explicitly indicates the target BLER corresponding to the reported CQI.

The target BLER corresponding to the reported CQI is determined according to an agreed implicit rule.

In an optional implementation of this embodiment, the manner that the base station indicates the target BLER corresponding to the reported CQI includes at least one of manners described below. The base station indicates whether the terminal reports the CQI and the target BLER corresponding to the reported CQI through jointly coding a trigger of an aperiodic CQI and a value of the corresponding target BLER in downlink control information (DCI).

The base station indicates the value of the corresponding target transmission error probability when the aperiodic CQI is triggered and the corresponding target transmission error probability when the terminal reports the aperiodic CQI through the bit field in the DCI or the information field in the radio resource control (RRC).

The base station indicates the value of the corresponding target transmission error probability when the aperiodic CQI is triggered through an independent 1 bit in the DCI, and indicates whether the corresponding target transmission error probability when the terminal reports the aperiodic CQI is the reference value or the lower target transmission error probability value, where the lower target transmission error probability value is less than the BELR equal to 10% and is determined as one of: the fixed value, the predefined value, or the value configured via higher layer signaling.

In an optional implementation of this embodiment, the manner that the terminal indicates the target BLER corresponding to the reported CQI includes at least one of manners described below. The terminal indicates that the target BLER is jointly coded with the CQI, where after bits of the target BLER and the CQI are concatenated, the concatenated bits are mapped onto a position of the CQI in a PUSCH according to a coding, modulation and mapping rule of the CQI.

The terminal indicates that the target BLER is independently coded and mapped onto the position of the CQI in the PUSCH according to the coding, modulation and mapping rule of the CQI, where a mapping manner in the PUSCH includes one of: mapping onto an adjacent position after the CQI, mapping onto two sides of the RI, mapping from a highest frequency domain position of the PUSCH in a manner of time domain followed by frequency domain.

Optionally, the implicit rule includes at least one of rules described below.

The target BLER corresponding to the reported CQI is determined according to transmission time of the CQI.

The terminal reports the CQIs corresponding to the different target BLERs in a polling manner. When the terminal receives the trigger for the aperiodic CQI, the terminal reports only a CQI corresponding to a lower target BLER, where a value of the lower target BLER is a fixed value or configured by the base station.

Optionally, determining the target BLER corresponding to the reported CQI according to the transmission time includes: determining the target BLER corresponding to the reported CQI according to a sub-frame where an uplink (UL) grant for triggering the aperiodic CQI is located or a sub-frame where a physical uplink shared channel (PUSCH) for transmitting and carrying the CQI is located.

From the description of the implementations described above, it will be apparent to those skilled in the art that the methods in the embodiment described above may be implemented by software plus a necessary general-purpose hardware platform, or may of course be implemented by hardware. However, in many cases, the former is a preferred implementation. Based on this understanding, the solutions provided by the present application substantially, or the part contributing to the existing art, may be embodied in the form of a software product. The computer software product is stored on a storage medium (such as a read-only memory (ROM)/random access memory (RAM), a magnetic disk or an optical disk) and includes several instructions for enabling a terminal apparatus (which may be a mobile phone, a computer, a server or a network apparatus) to execute the methods according to the embodiments of the present application.

Embodiment 2

This embodiment further provides an information transmission device. The device is used for implementing the above-mentioned embodiments and preferred implementations. What has been described will not be repeated. As used below, the term "module" may be software, hardware or a combination thereof capable of implementing predetermined functions. The device in the embodiment described below is preferably implemented by software, but implementation by hardware or by a combination of software and hardware is also possible and conceived.

FIG. 2 is a structural block diagram of an information transmission device according to an embodiment of the present application. As shown in FIG. 2, the device is applied to a terminal and includes a reporting module 20.

The reporting module 20 is configured to periodically and/or aperiodically report channel state information (CSI) to a base station, where target transmission error probabilities corresponding to a CQI reported at different time are not completely the same.

This embodiment further provides an information transmission device applied to the base station. The information transmission device includes a receiving module and an indication module. The receiving module is configured to receive the channel state information (CSI) periodically and/or aperiodically reported by the terminal, where target transmission error probabilities corresponding to the CSI reported at different time are not completely the same. The indication module is configured to indicate a target transmission error probability corresponding to the reported CSI to the terminal.

Optionally, in condition that the reporting module periodically reports the CQI to the base station, a manner for determining CQI transmission periods corresponding to different target BLERs includes at least one of manners described below.

The CQI transmission periods corresponding to the different target BLERs are independently configured and independently determined according to configurations.

The CQI transmission periods corresponding to the different target BLERs are uniformly configured and all of the CQI transmission periods are the same.

The CQI transmission periods corresponding to the different target BLERs are uniformly configured and the CQI transmission periods are not completely the same.

Optionally, in condition that the reporting module aperiodically reports the CQI to the base station, a strategy for determining a target BLER corresponding to the CQI includes at least one of strategies described below.

The target BLER corresponding to the reported CQI which is indicated by the base station is received.

The terminal indicates the target BLER corresponding to the reported CQI.

The target BLER corresponding to the reported CQI is determined according to an agreed implicit rule.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

Embodiment 3

This embodiment provides an information transmission method in which CQIs corresponding to different target BLERs are reported periodically and/or aperiodically. A periodic reporting manner and an aperiodic reporting manner are described below.

1. A periodic reporting manner

In a manner 1-1, CQI reporting periods corresponding to multiple target BLERs are the same as a transmission period of a reported CQI corresponding to a single target BLER.

In a manner 1-1(a), the CQI reporting periods corresponding to the target BLERs are the same. FIG. 3 is a schematic diagram illustrating periodic CSI reporting in which all of CQI reporting periods corresponding to different target BLERs are the same according to an embodiment of the present application, as shown in FIG. 3.

In a manner 1-1(b), the CQI reporting periods corresponding to the target BLERs are different. Preferably, a CQI reporting period corresponding to a lower target BLER is an integer multiple of a CQI reporting period corresponding to an existing target BLER. FIG. 4 is a schematic diagram illustrating periodic CSI reporting in which CQI reporting periods corresponding to different target BLERs are not completely the same according to an embodiment of the present application, as shown in FIG. 4.

In a manner 1-2, the CQI reporting periods corresponding to the target BLERs are independently configured. FIG. 5 is a schematic diagram illustrating periodic CSI reporting in which CQI reporting periods corresponding to different target BLERs are independent from each other according to an embodiment of the present application.

2. An aperiodic reporting manner

In a manner 2-1, an indication via explicit signaling is performed by an evolved NodeB (eNB). In a manner 2-1(a), a trigger of an aperiodic CQI jointly coded with a value of the target BLER is indicated by DCI, as shown in Table 1.

Table 1

| CQI request and target BLER | Description |
|---|---|
| 00 | Not triggering the aperiodic CQI |
| 01 | Triggering the aperiodic CQI with a target BLER equal to 10 % |
| 10 | Triggering the aperiodic CQI with a target BLER equal to 1 % |
| 11 | Triggering the aperiodic CQI with a target BLER equal to 0.1 % |

In a manner 2-1(b), the target BLER corresponding to reported CQI is independently indicated by the DCI or RRC, as shown in Table 2. Table 2

| target BLER for CQI request | Description |
|---|---|
| 00 | 10% |
| 01 | 1% |
| 10 | 0.1 % |
| 11 | 0.01 % (or reserved) |

In a manner 2-2, an indication is performed by a UE.

The UE reports the CQI and a corresponding target BLER.

In a manner 2-3, the target BLER is determined implicitly.

In a manner 2-3(a), the target BLER is determined by transmission time. The target BLER corresponding to the reported CQI is determined according to a sub-frame k1 where an UL grant for triggering the CQI is located or a sub-frame k2 where a PUSCH for transmitting and carrying the CQI is located. For example, Target_BLER_index = (SFN* 10+k) mod Total_Target_BLER. In a manner 2-3(b), the UE alternately reports the CQI corresponding to the different target BLERs. The corresponding target BLER is polled every time the CQI is reported.

In a manner 2-3(c), the UE only aperiodically reporting a CQI corresponding to a lower target BLER.

This embodiment further includes multiple specific embodiments used for describing the present application in detail.

Specific embodiment 1

The embodiment related to same CQI reporting periods corresponding to different target BLERs as shown in FIG. 3 is not covered by the claimed invention. FIG. 3 is a schematic diagram illustrating periodic CSI reporting in which all of CQI reporting periods corresponding to different target BLERs are the same according to an embodiment of the present application. CSI is replaced with a CQI for description below. In a case 1, a CQI corresponding to a single target BLER is reported at a period of 5 ms which is used as an example. It is to be noted that a value (5) of the period is not limited to the example, and a unit (ms) of the period is not limited to the example. In a case 2, CQIs corresponding to two kinds of target BLERs are reported, a CQI corresponding to each kind of target BLER is reported at a period of 10 ms, and the CQIs corresponding to all the two kinds of target BLERs are still reported at the period of 5 ms. In a case 3, the CQIs corresponding to three kinds of target BLERs are reported, the CQI corresponding to each kind of target BLER is reported at a period of 15 ms, and the CQIs corresponding to all the three kinds of target BLERs are still reported at the period of 5 ms. The CQI corresponding to more kinds of target BLERs are reported in a similar manner, which is not repeated.

The base station configures a period via higher layer signaling to report CQIs corresponding to different target BLERs. A single period of $N_p$ is configured to transmit CQIs corresponding to B kinds of target BLERs at a same period of $N_p$, that is, CQI reporting time corresponding to each kind of target BLER has a different offset value of $N_{OFFSET,CQI,i}$. A value of B may be 1, 2, 3, ....

In condition that the CQI corresponding to one kind of target BLER is only reported, specific CQI reporting time (sub-frame) is determined according to a formula: $\left(10 \times n_f + \lfloor n_s / 2 \rfloor - N_{OFFSET,CQI}\right) \bmod N_P = 0$, where $n_s$ denotes a timeslot index corresponding to a current sub-frame, $n_f$ denotes an index of a radio frame where the current sub-frame is located, $N_{OFFSET,CQI}$ denotes an offset value configured by the base station, and $N_P$ denotes a value of the period configured by the base station. In the case 1, $N_P = 5$, and $N_{OFFSET,CQI} = 0$.

In condition that the CQIs corresponding to the B kinds of target BLERs are reported, specific CQI reporting time (sub-frame) corresponding to each kind of target BLER is determined according to a formula: $\left(10 \times n_f + \lfloor n_s / 2 \rfloor - N_{OFFSET,CQI,i}\right) \bmod N_P = 0$. An offset value corresponding to each kind of target BLER (BLER_i) needs to be determined separately for each target BLER, and is specifically $N_{OFFSET,CQI,i} = \left(N_{OFFSET,CQI} + i \cdot \lfloor N_p / B \rfloor\right) \bmod N_p$, where $i = 0,1,...,B$-1. $n_s$ denotes the timeslot index of the current sub-frame, $n_f$ denotes the index of the radio frame index where the current sub-frame is located, $N_{OFFSET,CQI}$ denotes the offset value configured by the base station, and $N_P$ denotes the value of the period configured by the base station. For example, in the case 2, B=2, BLER_0 = 10 %, BLER_1=1 %, and $N_p = 10$ is the period for B = 2, so that $N_{OFFSET,CQI,0} = N_{OFFSET,CQI} = 0$, and $N_{OFFSET,CQI,1} = 5$. For example, in the case 3, B=3, BLER_0 = 10 %, BLER_1 = 1 %, BLER_2 = 0.1 %, and $N_p = 15$ is the period for B = 3, so that $N_{OFFSET,CQI,0} = N_{OFFSET,CQI} = 0$, $N_{OFFSET,CQI,1} = 5$, and $N_{OFFSET,CQI,2} = 10$.

Alternatively, the base station configures the period via the higher layer signaling to report the CQIs corresponding to the different target BLERs. The single period of $N_p$ is configured to transmit, the CQIs corresponding to the B kinds of target BLERs at a same period of $B \cdot N_P$, that is, the CQI reporting time corresponding to each kind of target BLER has the different offset value of $N_{OFFSET,CQI,i}$. B = 1 or 2 or 3 or 4 or 5.

In condition that the CQIs corresponding to the B kinds of target BLERs are reported, the specific CQI reporting time (sub-frame) corresponding to each kind of target BLER is determined according to a formula:

$$\left(10 \times n_f + \left\lfloor n_s / 2 \right\rfloor - N_{OFFSET,CQI,i}\right) \bmod \left(B \cdot N_P\right) = 0$$ . The offset value $N_{OFFSET,CQI,i}$ corresponding to each kind of target BLER (BLER_i) needs to be determined separately for each kind of target BLER, and is specifically $N_{OFFSET,CQI,i} = (N_{OFFSET,CQI} + i \cdot N_p) \bmod (B \cdot N_p)$, where $i = 0,1, ...,B\text{-}1$. $n_s$ denotes the timeslot index of the current sub-frame, $n_f$ denotes the index of the radio frame where the current sub-frame is located, $N_{OFFSET,CQI}$ denotes the offset value configured by the base station, and $N_P$ denotes the value of the period configured by the base station. For example, in the case 2, B=2, BLER_0 = 10 %, BLER_1 = 1 %, and the period for $N_p = 5$ and B = 2 is $B \cdot N_P = 10$, so that $N_{OFFSET,CQI,0} = N_{OFFSET,CQI} = 0$, and $N_{OFFSET,CQI,1} = 5$. For example, in the case 3, B=3, BLER_0 = 10 %, BLER_1 = 1 %, BLER_2 = 0.1 %, and the period for $N_p = 5$ and B = 3 is $B \cdot N_P = 15$, so that $N_{OFFSET,CQI,0} = N_{OFFSET,CQI} = 0$, $N_{OFFSET,CQI,1} = 5$, and $N_{OFFSET,CQI,2} = 10$.

The base station configures the periods and the offset values for reporting the periodic CQIs corresponding to multiple target BLERs, and determines the periodic CQIs corresponding to the different target BLERs which is sent by the terminal on specific sub-frame resources, thereby reporting the CQIs corresponding to the different target BLERs.

With the method for reporting CQIs corresponding to different target BLERs according to this embodiment, the base station may flexibly select a CQI corresponding to an appropriate target BLER for a different number of transmissions or a different number of repeated transmissions in a HARQ process, and select an appropriate modulation and coding scheme (MCS) for the terminal to send a downlink traffic channel, thereby improving system spectral efficiency. Here, the UE reports the CQIs corresponding to multiple kinds of target BLERs to the base station, and the base station selects the appropriate MCS for the terminal according to the CQIs in a scheduling process, so that the base station may flexibly select the MCS due to CQI results corresponding to different target BLERs.

Specific embodiment 2

FIG. 4 is a schematic diagram illustrating periodic CSI reporting in which CQI reporting periods corresponding to different target BLERs are not completely the same according to an embodiment of the present application. It is to be noted that the CSI includes at least a CQI, and CSI is replaced with the CQI for description below. In a case 1, a CQI corresponding to a single target BLER is reported at a period of 5 ms, which is used as an example. It is to be noted that a value (5) of the period is not limited to the example, and a unit (ms) of the period is not limited to the example. In a case 2, CQIs corresponding to three kinds of target BLERs are reported, a CQI reporting period corresponding to a target BLER equal to 10 % is 10 ms, a CQI reporting period corresponding to a target BLER equal to 1 % is 20 ms, a CQI reporting period corresponding to a target BLER equal to 0.1 % is 20 ms, and the CQIs corresponding to all the target BLERs are still reported at the period of 5 ms. The CQIs corresponding to more kinds of target BLERs are reported in a similar manner, which is not repeated.

A base station configures a period via higher layer signaling to report CQIs corresponding to different target BLERs. A single period of $N_p$ is configured to transmit CQIs corresponding to B kinds of target BLERs at different periods of $N_p/m_j$, where $m_j$ denotes a number of transmissions in the period of $N_p$ when an index of a target BLER is j, and $j = 1,2,...,B$. That is, CQI reporting time corresponding to each kind of target BLER has a different offset value of $N_{OFFSET,CQI,i}$ and numbers of transmissions are not completely the same. A value of B may be 1, 2, 3, ....

In condition that the CQIs corresponding to the B kinds of target BLERs are reported, specific CQI reporting time (sub-frame) corresponding to each target BLER is determined according to a formula:

$$\left(10 \times n_f + \left\lfloor n_s / 2 \right\rfloor - N_{OFFSET,CQI,i}\right) \bmod N_P = 0$$ . A sum of numbers of transmissions of the reported CQIs corresponding to the B kinds of target BLERs in the period of $N_p$ is M (M≥B), and $$M = \sum_{j=1}^{B} m_j$$ . An offset value corresponding to each kind of target BLER is $$N_{OFFSET,CQI,i} = \left(N_{OFFSET,CQI} + i \cdot \left\lfloor N_p / M \right\rfloor\right) \bmod N_p$$ , where $i = 0,1,...,M\text{-}1$. A number of offset values corresponding to each target BLER (BLER_i) is predefined or configured by the base station, that is, a value of i corresponding to $m_j$ needs to be predefined or configured. For example, in the case 2, B = 3, BLER_1 = 10 %, BLER_2 = 1 %, BLER_3 = 0.1 %, $N_p = 20$ is a period for B = 3, BLER_1 corresponds to i = 0, 2 and $m_1 = 2$, BLER_2 corresponds to i = 1

$$M = \sum_{j=1}^{B} m_j = 4$$

and $m_2$=1, and BLER_3 corresponds to i = 3 and $m_3$ =1, so that , $N_{OFFSET,CQI,0} = N_{OFFSET,CQI}$ = 0, $N_{OFFSET,CQI,1}$ = 5, $N_{OFFSET,CQI,2}$ = 10, and $N_{OFFSET,CQI,3}$ = 15. A period of BLER_1 is $N_p/m_1$ =10, a period of BLER_2 is $N_p/m_2$ = 20, and a period of BLER_3 is $N_p/m_3$ = 20.

I kinds of periods are uniformly configured to transmit CSI corresponding to $B_i$ kinds of target transmission error probabilities at a same period, where $B_i$ denotes a group of target transmission error probabilities to which CSI reported at the same period corresponds among the B different kinds of target transmission error probabilities, where 1≤i≤I, 1≤I≤ B, 1 ≤ $B_i$ ≤ B, for each group $B_i$, the period of $N_p$ is configured to transmit the CSI corresponding to the $B_i$ kinds of target transmission error probabilities at a same period of $N_p$ or $B_i \cdot N_P$, and i and I are both positive integers.

Alternatively, the base station configures the period via the higher layer signaling to report the CQIs corresponding to the different kinds of target BLERs. The I kinds of periods are configured to transmit CQIs corresponding to $B_i$ kinds of target BLERs at the same period, where $B_i$ denotes a group of target BLERs to which a CQI reported at the same period corresponds among the B different kinds of target BLERs, 1≤i≤I, 1≤ I ≤ B, and 1≤ $B_i$ ≤ B.

The CQIs corresponding to different target BLERs in each group $B_i$ are reported at the same period. For each group $B_i$, a method for determining the CQI reporting period and an offset value corresponding to each kind of target BLER is the same as that in the specific embodiment 1, and the period of $N_p$ is configured to transmit CQIs corresponding to the $B_i$ kinds of target transmission error probabilities at a same period of $N_p$ or $B_i \cdot N_P$, and i and I are both positive integers. For example, in the case 2, B = 3, BLER_1 = 10 %, BLER_2= 1 %, BLER_3 = 0.1 %, different target BLERs to which the CQI reported at the same period corresponds are divided into a group, and in this case, two groups are divided, where $B_1$ includes BLER_1 = 10 %, $N_p$ = 10 is a period for $B_1$, and $N_{OFFSET,CQI,0}$= $N_{OFFSET,CQI}$ = 0; $B_2$ includes BLER_1 = 1 % and BLER_2= 0.1 %, $N_p$ = 20 is a period for $B_2$ , $N_{OFFSET,CQI,0}$ = $N_{OFFSET,CQI}$ = 5, and $N_{OFFSET,CQI,1}$ = 15.

The base station configures the periods and the offset values for reporting periodic CQIs corresponding to multiple target BLERs, and determines the periodic CQIs corresponding to the different target BLERs sent by the terminal on specific sub-frame resources, thereby reporting the CQIs corresponding to different target BLERs, reporting the CQIs corresponding to the different target BLERs at different periods, and reducing transmission densities of reported CQIs corresponding to some target BLERs with a small usage frequency.

With the method for reporting CQIs corresponding to different target BLERs according to this embodiment, the base station may flexibly select a CQI corresponding to an appropriate target BLER for a different number of transmissions or a different number of repeated transmissions in a HARQ process, and select an appropriate MCS for the terminal to send a downlink traffic channel, thereby improving system spectral efficiency.

Specific embodiment 3

FIG. 5 is a schematic diagram illustrating periodic CSI reporting in which CQI reporting periods corresponding to different target BLERs are independent from each other according to an embodiment of the present application. It is to be noted that CSI includes at least a CQI, and the CSI is replaced with the CQI for description below. In a case 1, a CQI corresponding to a single target BLER is reported at a period of 5 ms which is used as an example. It is to be noted that the value (5) of the period is not limited to the example, and a unit (ms) of the period is not limited to the example. In a case 2, CQIs corresponding to three kinds of target BLERs are reported, a CQI reporting period for a target BLER equal to 10 % is 10 ms, a CQI reporting period for a target BLER equal to 1 % is 10 ms, a CQI reporting period for a target BLER equal to 0.1 % is 10 ms, and a period for reporting the CQIs corresponding to all the three target BLERs is less than the period of 5 ms for reporting the CQI corresponding to the single target BLER in the case 1 and comprehensively calculated as 2.5 ms. The CQIs corresponding to more kinds of target BLERs are reported in a similar manner, which is not repeated.

A base station configures a period via higher layer signaling to report CQIs corresponding to different target BLERs. A transmission period is independently configured for each target BLER to transmit CQIs corresponding to B kinds of target BLERs. A value of B may be 1, 2, 3, ...

In condition that a CQI corresponding to any kind of target BLER is reported, specific CQI reporting time (sub-frame) is determined according to a formula:

$$\left(10 \times n_f + \lfloor n_s / 2 \rfloor - N_{OFFSET,CQI}\right) \bmod N_P = 0$$

, where $n_s$ denotes a timeslot index of a current sub-frame, $n_f$ denotes an index of a radio frame where the current sub-frame is located, $N_{OFFSET,CQI}$ denotes an offset value configured by the base station, $N_P$ denotes a value of the period configured by the base station.

In the case 2, in condition that the CQI corresponding to BLER = 10 % is reported, $N_P$ = 5, and $N_{OFFSET,CQI}$ = 0. In condition that the CQI corresponding to BLER = 1 % is reported, $N_P$ = 10, and $N_{OFFSET,CQI}$ = 2. In condition that the CQI corresponding to BLER = 0.1 % is reported, $N_P$ = 10, and $N_{OFFSET,CQI}$ = 7

The base station configures the periods and the offset values for reporting the periodic CQIs corresponding to multiple target BLERs, and determines the periodic CQIs corresponding to the different target BLERs sent by the terminal on specific sub-frame resources, thereby reporting the CQIs corresponding to the different target BLERs, and reporting the CQIs corresponding to the different target BLERs at independent periods through independent information configuring, and flexibly configuring transmission densities of the reported CQIs corresponding to the different target BLERs.

With the method for reporting CQIs corresponding to different target BLERs according to this embodiment, the base station may flexibly select a CQI corresponding to an appropriate target BLER for a different number of transmissions or a different number of repeated transmissions in a HARQ process, and select an appropriate MCS for the terminal to send a downlink traffic channel, thereby improving system spectral efficiency.

Specific embodiment 4

This embodiment provides a method for aperiodically reporting CQIs corresponding to different target BLERs. An eNB triggers aperiodic CSI reporting and notifies a terminal of a target BLER corresponding to a reported CQI through downlink control information (DCI), specifically through an UL grant. It is to be noted that CSI includes at least the CQI, and the CSI is replaced with the CQI for description below.

A base station indicates whether the terminal reports the CQI and the target BLER corresponding to the reported CQI through jointly coding a trigger of an aperiodic CQI and a value of a corresponding target BLER in the DCI. For example, as shown in Table 3, 2 bits are used, and it is assumed that 1 bit is used for the trigger of the aperiodic CQI corresponding to only a single target BLER. It is to be noted that only $B = 3$ kinds of target BLERs are taken as examples in Table 3, other values of B are similar to this case. For example, in condition that $1 < B < 3$, a reserved state exists in Table 3, and in condition that $B > 3$, 3 bits are used for an indication in table 3.

Table 3

| CQI request and target BLER | Description |
| --- | --- |
| 00 | Not triggering the aperiodic CQI |
| 01 | Triggering the aperiodic CQI with a target BLER equal to 10 % |
| 10 | Triggering the aperiodic CQI with a target BLER equal to 1 % |
| 11 | Triggering the aperiodic CQI with a target BLER equal to 0.1 % |

Similarly, the base station indicates whether the terminal reports the CQI and the target BLER corresponding to the reported CQI through jointly coding the trigger of the aperiodic CQI and the value of the corresponding target BLER in the DCI. As shown in Table 4, 3 bits are used and it is assumed that 2 bits are used for the trigger of the aperiodic CQI corresponding to only the single target BLER. It is to be noted that it is not limited to the case where 2 bits are used for the trigger of the aperiodic CQI corresponding to the single target BLER and Table 4 only illustrates one case where different target BLERs are jointly coded with the trigger of the aperiodic CQI. It is to be noted that the case where 3 bits are used for the trigger of the aperiodic CQI corresponding to the single target BLER is not repeated.

Table 4

| CQI request and target BLER | Description |
| --- | --- |
| 000 | Not triggering the aperiodic CQI |
| 001 | Triggering the aperiodic CQI with the target BLER equal to 10 % for a serving cell [c] |
| 010 | Triggering the aperiodic CQI with the target BLER equal to 10 % for a 1st set of serving cells configured by higher layers |
| 011 | Triggering the aperiodic CQI with the target BLER equal to 10 % for a 2nd set of serving cells configured by higher layers |
| 100 | Triggering the aperiodic CQI with the target BLER equal to 1 % for the serving cell [c] |
| 101 | Triggering the aperiodic CQI with the target BLER equal to 1 % for the 1st set of serving cells configured by higher layers |
| 110 | Triggering the aperiodic CQI with the target BLER equal to 1 % for the 2nd set of serving cells configured by higher layers |
| 111 | Reserved |

Alternatively, the base station indicates the value of the corresponding BLER when the aperiodic CQI is triggered through a bit field in the DCI or an information field in RRC to indicate the target BLER when the terminal reports the aperiodic CQI. For example, as shown in Table 5, 2 bits are used for indicating at most B = 4 kinds of target BLER values. In condition that B = 3 kinds of target BLER values are indicated, a fourth state is represented by reserved. It is to be noted that only B = 3 or 4 kinds of target BLERs are used as examples in Table 5, and other values of B are similar to this case. For example, in condition that 1 < B < 2, 1 bit is used in Table 5, and in condition that B > 4, 3 bits are used in Table 5.

Table 5

| target BLER for CQI request | Description |
| --- | --- |
| 00 | 10% |
| 01 | 1% |
| 10 | 0.1 % |
| 11 | 0.01 % (or reserved) |

Alternatively, the base station indicates the value of the corresponding BLER when the aperiodic CQI is triggered through 1 independent bit in the DCI and indicates whether the corresponding target BLER when the terminal reports the aperiodic CQI is a reference value or a lower target BLER value. For example, as shown in Table 6, 1 bit is used for indicating whether the target BLER is a reference value of 10 % or the lower target BLER value. The lower target BLER value is a fixed value/a predefined value or a value less than a BELR equal to 10 % and configured via higher layer signaling (such as RRC signaling).

Table 6

| target BLER for CQI request | Description |
| --- | --- |
| 0 | 10% |
| 1 | 1 % (or a predefined value/a value less than 10% and configured by RRC) |

In condition that the UL grant includes an indication for triggering the aperiodic CQI reporting, the terminal transmits the CQI in an uplink traffic channel scheduled by the UL grant.

In this embodiment, the base station indicates the target BLER when the aperiodic CQI is reported, so that the base station may flexibly indicate and trigger the terminal to send the CQIs corresponding to the different target BLERs as required. The base station may flexibly select a CQI corresponding to an appropriate target BLER for a different number of transmissions or a different number of repeated transmissions in a HARQ process, and select an appropriate MCS for the terminal to send a downlink traffic channel, thereby improving system spectral efficiency.

Specific embodiment 5

This embodiment provides a method for aperiodically reporting CQIs corresponding to different target BLERs. An eNB triggers aperiodic CSI reporting through DCI, specifically an UL grant, and a terminal reports a corresponding target BLER while reporting a CQI. It is to be noted that CSI includes at least the CQI, and the CSI is replaced with the CQI for description below.

After receiving the UL grant containing an indication of a trigger of an aperiodic CQI, the terminal sends the CQI in a PUSCH scheduled by the UL grant, and reports the target BLER corresponding to the CQI. An x-bit indication includes at most B = $2^x$ kinds of target BLERs. For example, x = 2 may indicate a maximum of 4 kinds of target BLERs, and x = 3 may indicate a maximum of 8 kinds of target BLERs. The x bits are mapped onto the PUSCH after coding and modulation.

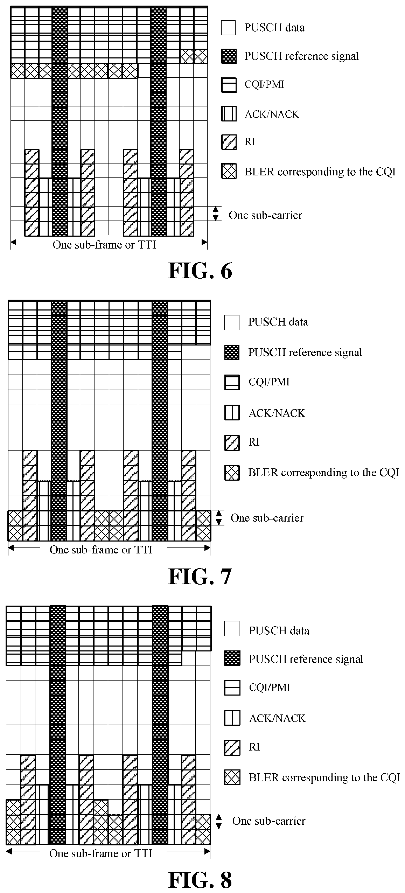

In condition that the indication is jointly coded with the CQI, a mapping position is a position of the CQI mapped onto the PUSCH. In this case, after the x bits and bits of the CQI are concatenated, the concatenated bits are mapped according to a coding, modulation and mapping rule of the CQI. In condition that the indication is independently coded, a preferred mapping position in the PUSCH is: a position next to the CQI, positions on two sides of a RI, or mapping positions from a highest frequency domain position of the PUSCH in a manner of time domain followed by frequency domain. FIG. 6 is a schematic diagram illustrating a mapping position next to a CQI according to an embodiment of the present application. FIG. 7 is a schematic diagram illustrating mapping positions on two sides of a RI according to an embodiment of the present application. FIG. 8 is a schematic diagram illustrating a mapping position from a highest frequency domain position of a PUSCH in a manner of time domain followed by frequency domain according to an embodiment of the present application.

In this embodiment, the terminal indicates the target BLER when the aperiodic CQI is reported, so that the terminal may flexibly send the CQIs corresponding to the different target BLERs as required. According to the CQI reported by the terminal and the corresponding target BLER, the base station may flexibly select a CQI corresponding to an appropriate target BLER for a different number of transmissions or a different number of repeated transmissions in a HARQ process, and select an appropriate MCS for the terminal to send a downlink traffic channel, thereby improving system spectral efficiency.

Specific embodiment 6

This embodiment provides a method for aperiodically reporting CQIs corresponding to different target BLERs. An eNB triggers aperiodic CSI reporting through DCI, specifically an UL grant. A target BLER corresponding to a CQI reported by a terminal is learned according to an implicit rule. It is to be noted that CSI includes at least the CQI, and aperiodic CSI is replaced with an aperiodic CQI for description below.

After receiving the UL grant including an indication of a trigger of the aperiodic CQI, the terminal sends the CQI in a PUSCH scheduled by the UL grant, where the CQI is a CQI corresponding to the target BLER determined according to the implicit rule.

The implicit rule is determining the target BLER according to transmission time. The target BLER corresponding to the reported CQI is determined according to a sub-frame $k1$ where the UL grant for triggering the aperiodic CQI is located or a sub-frame $k2$ where a PUSCH for transmitting and carrying the CQI is located. For example: taking $k1$ as an example, Target_BLER_index = (SFN*10+k1) mod Total_Target_BLER, where Target_BLER_index denotes the target BLER of the CQI triggered, Total_Target_BLER denotes a total number of different target BLERs, SFN*10+k1 denotes a serial number of a current sub-frame for transmitting the UL grant, SFN denotes a radio frame index. It is to be noted that the serial number of the current sub-frame for transmitting the UL grant herein is illustrated by an LTE FDD frame structure, but it is not limited thereto.

Alternatively, the implicit rule is that the UE alternately reports the CQIs corresponding to the different target BLERs. The corresponding target BLER is polled every time the CQI is reported. That is, a target BLER corresponding to an aperiodic CQI currently triggered is determined according to a next level of a target BLER corresponding to an aperiodic CQI previously triggered.

For example, in condition that a target BLER corresponding to the trigger for the aperiodic CQI previously received by the terminal is 10 %, a target BLER corresponding to the trigger for the aperiodic CQI currently received by the terminal is 1 %.

Alternatively, the implicit rule is that when the UE receives the trigger for the aperiodic CQI, the terminal reports only a CQI corresponding to a lower target BLER. A value of the lower target BLER is a fixed value or configured by the base station, for example, the lower target BLER is 1 %.

In this embodiment, the target BLER when the aperiodic CQI is reported is determined according to the implicit rule, so that the base station may flexibly trigger the terminal to send the CQIs corresponding to the different target BLERs as required. The base station may flexibly select a CQI corresponding to an appropriate target BLER for a different number of transmissions or a different number of repeated transmissions in a HARQ process, and select an appropriate MCS for the terminal to send a downlink traffic channel, thereby improving system spectral efficiency. With the method in this embodiment, the CQIs corresponding to the different target BLERs may be reported, and the CQIs are reported periodically and/or aperiodically with different transmission densities flexibly, ensuring that the CQIs corresponding to the different target BLERs may be flexibly determined in each downlink data transmission in a HARQ transmission process, and improving the system spectral efficiency.

Embodiment 4

An embodiment of the present application further provides a storage medium. Optionally, in this embodiment, the storage medium may be configured to store program codes for implementing a step described below.

In S1, channel state information (CSI) is periodically and/or aperiodically reported to a base station, where target transmission error probabilities corresponding to the CSI reported at different time are not completely the same.

Optionally, in this embodiment, the above-mentioned storage medium may include, but is not limited to, a USB flash disk, a read-only memory (ROM), a random access memory (RAM), a mobile hard disk, a magnetic disk, an optical disk or another medium capable of storing the program codes.

Optionally, in this embodiment, a processor executes, according to the program codes stored in the storage medium, the step of periodically and/or aperiodically reporting the channel state information (CSI) to the base station, where the target transmission error probabilities corresponding to the CSI reported at different time are not completely the same.

Optionally, for specific examples in this embodiment, reference may be made to the examples described in the above-mentioned embodiments and optional implementations, and repetition will not be made in this embodiment.

Apparently, it should be understood by those skilled in the art that each of the above-mentioned modules or steps of the present application may be implemented by a general-purpose computing device, the modules or steps may be concentrated on a single computing device or distributed on a network composed of multiple computing devices, and alternatively, the modules or steps may be implemented by program codes executable by the computing device, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

The above are only preferred embodiments of the present application and are not intended to limit the present application, and for those skilled in the art, the present application may have various modifications and variations as provided for by the scope of the appended claims.

**INDUSTRIAL APPLICABILITY**

According to the present application, the terminal periodically and/or aperiodically reports the CSI to the base station, where the target transmission error probabilities corresponding to CQI reported at the different time are different, so that the CQI is reported periodically and/or aperiodically with different transmission densities flexibly. The terminal and the base station implement the HARQ according to the target BLER, ensuring that the CQIs corresponding to different target BLERs may be flexibly determined in each downlink data transmission in the HARQ transmission process, improving the system spectral efficiency, solving the problem of the low system spectral efficiency due to transmissions at the same target BLER in the related art.

**Claims**

1. An information transmission method, comprising:
   periodically and/or aperiodically reporting (S102), by a terminal, channel state information, CSI, to a base station for the base station to perform a Hybrid Automatic Repeat Request, HARQ, transmission process according to a target transmission error probability corresponding to a channel quality indicator, CQI, for the CSI reporting, wherein CQIs, corresponding to different target transmission error probabilities, are reported at different times.

2. The method of claim 1, wherein in condition that the terminal periodically reports the CSI to the base station, a manner for determining CSI transmission periods corresponding to different target transmission error probabilities comprises at least one of:

   independent configuring in which the CSI transmission periods corresponding to the different target transmission error probabilities are independently determined according to configurations; or
   uniform configuring in which the CSI transmission periods corresponding to the different target transmission error probabilities are not the same.

3. The method of claim 2, wherein the uniform configuring in which the CSI transmission periods corresponding to the different target transmission error probabilities are not the same is implemented by one of the following manners:

   configuring a single period of $N_p$ to transmit CSI corresponding to B kinds of target transmission error probabilities at different periods of $N_p/m_j$, wherein $m_j$ denotes a number of transmissions of CSI corresponding to a target transmission error probability with an index j in the period of $N_p$, and $j$ = 1,2, ..., B; or
   uniformly configuring I kinds of periods to transmit CSI corresponding to $B_i$ kinds of target transmission error probabilities at a same period, wherein $B_i$ denotes a group of target transmission error probabilities to which CSI reported at the same period corresponds among the B kinds different target transmission error probabilities, wherein $1 \leq i \leq I$, $1 \leq I \leq B$, $1 \leq B_i \leq B$, for each group $B_i$, the period of $N_p$ is configured to transmit the CSI corresponding to the $B_i$ kinds of target transmission error probabilities at a same period of $N_p$ or $B_i \cdot N_P$, and i and I are both positive integers.

4. The method of claim 3, wherein in condition that the period of $N_p$ is configured to transmit the CSI corresponding to the B kinds of target transmission error probabilities at the different periods $N_p/m_j$, offset values corresponding to the B kinds of target transmission error probabilities are determined according to a configured offset value of $N_{OFFSET,CQI}$,

the configured period of $N_p$, and a sum M of numbers of transmissions of reported CSI corresponding to the B kinds of target transmission error probabilities in the period $N_p$, offset values corresponding to the different target transmission error probabilities are unequally distributed in a period of $B \cdot N_P$, and a minimum interval between offset values for reporting the CSI corresponding to the B kinds of target transmission error probabilities is $\left\lfloor \overline{N_p}/M \right\rfloor$, wherein M denotes the sum of numbers of transmissions of reported CSI corresponding to the B kinds of target transmission error probabilities in the period of $N_p$, M≥B, $i = 0,1,...,M$-1, and a value of i corresponding to $m_j$ is predefined or configured by the base station.

5. The method of claim 1, wherein in condition that the terminal aperiodically reports the CSI to the base station, a manner for determining the target transmission error probability corresponding to the CQI comprises at least one of:

> receiving the target transmission error probability corresponding to the reported CQI which is indicated by the base station;
> indicating, by the terminal, the target transmission error probability corresponding to the reported CQI; or
> determining the target transmission error probability corresponding to the reported CQI according to an implicit rule;
> wherein the implicit rule comprises at least one of:

>> determining the target transmission error probability corresponding to the reported CQI according to transmission time of the CQI;
>> reporting, by the terminal, CQIs corresponding to different target transmission error probabilities in a polling manner; or
>> when the terminal receives a trigger for aperiodic CQI, reporting only CQI corresponding to a target transmission error probability less than a reference value, wherein a value of the target transmission error probability less than the reference value is a fixed value or configured by the base station.

6. The method of claim 5, wherein the indicating, by the terminal, the target transmission error probability corresponding to the reported CQI comprises one of:

> indicating, by the terminal, that the target transmission error probability is jointly coded with the CQI, wherein after bits of the target transmission error probability and the CQI are concatenated, the concatenated bits are mapped onto a position of the CQI in a physical uplink shared channel, PUSCH, according to a coding, modulation and mapping rule of the CQI; or
> indicating, by the terminal, that the target transmission error probability is independently coded, wherein a mapping manner in the PUSCH comprises one of: mapping onto an adjacent position after the CQI, mapping onto two sides of a rank indicator, RI, mapping from a highest frequency domain position of the PUSCH in a manner of time domain followed by frequency domain.

7. An information transmission method, comprising:

> receiving, by a base station, channel state information, CSI, periodically and/or aperiodically reported by a terminal for the base station to perform a Hybrid Automatic Repeat Request, HARQ, transmission process according to a target transmission error probability corresponding to a channel quality indicator, CQI, for the CSI reporting, wherein CQIs, corresponding to different target transmission error probabilities, are reported at different times; and
> indicating, by the base station, the target transmission error probability corresponding to the reported CQI to the terminal.

8. The method of claim 7, wherein indicating, by the base station, the target transmission error probability corresponding to the reported CQI to the terminal comprises at least one of:

> indicating, by the base station, whether the terminal reports the CQI and the target transmission error probability corresponding to the reported CQI through jointly coding a trigger of aperiodic CQI and a value of a corresponding target transmission error probability in downlink control information, DCI;
> indicating, by the base station, the value of the corresponding target transmission error probability when the aperiodic CQI is triggered and the corresponding target transmission error probability when the terminal reports the aperiodic CQI through a bit field in the DCI or an information field in radio resource control, RRC; or

indicating, by the base station, the value of the corresponding target transmission error probability when the aperiodic CQI is triggered through 1 bit in the DCI, and indicating whether the corresponding target transmission error probability when the terminal reports the aperiodic CQI is a reference value or a lower target transmission error probability value, wherein the lower target transmission error probability value is less than a block error rate, BELR, equal to 10 % and is determined as one of: a fixed value, a predefined value, or a value configured via higher layer signaling.

9. An information transmission device, comprising:
a reporting module (20), which is configured to periodically and/or aperiodically report channel state information, CSI, to a base station for the base station to perform a Hybrid Automatic Repeat Request, HARQ, transmission process according to a target transmission error probability corresponding to a channel quality indicator, CQI, for the CSI reporting, wherein CQIs, corresponding to different target transmission error probabilities, are reported at different times.

10. An information transmission device, comprising:

a receiving module, which is configured to receive channel state information, CSI, periodically and/or aperiodically reported by a terminal for the base station to perform a Hybrid Automatic Repeat Request, HARQ, transmission process according to a target transmission error probability corresponding to a channel quality indicator, CQI, for the CSI reporting, wherein CQIs, corresponding to different target transmission error probabilities, are reported at different times; and
an indication module, which is configured to indicate the target transmission error probability corresponding to the reported CQI o the terminal.

11. A storage medium, which is configured to store computer-executable instructions for executing the information transmission method of any one of claims 1 to 8.

**Patentansprüche**

1. Informationsübertragungsverfahren, umfassend:
periodisches und/oder aperiodisches Melden (S102) von Kanalzustandsinformationen, (CSI) durch ein Endgerät an eine Basisstation für die Basisstation zum Durchführen eines Übertragungsprozesses einer hybrider automatischer Wiederholungsaufforderung (HARQ) gemäß einer Zielübertragungsfehlerwahrscheinlichkeit entsprechend einem Kanalqualitätsindikator (CQI) für die CSI-Meldung, wobei CQI, die verschiedenen Zielübertragungsfehlerwahrscheinlichkeiten entsprechen, zu unterschiedlichen Zeiten gemeldet werden.

2. Verfahren nach Anspruch 1, wobei, wenn das Endgerät die CSI periodisch an die Basisstation meldet, eine Weise zum Bestimmen von CSI-Übertragungsperioden, die verschiedenen Zielübertragungsfehlerwahrscheinlichkeiten entsprechen, mindestens eine der Folgenden umfasst:

unabhängiges Konfigurieren, in dem die CSI-Übertragungsperioden, die den unterschiedlichen Zielübertragungsfehlerwahrscheinlichkeiten entsprechen, unabhängig gemäß Konfigurationen bestimmt werden; oder
einheitliches Konfigurieren, in dem die CSI-Übertragungsperioden, die den unterschiedlichen Zielübertragungsfehlerwahrscheinlichkeiten entsprechen, nicht gleich sind.

3. Verfahren nach Anspruch 2, wobei das einheitliche Konfigurieren, in dem die CSI-Übertragungsperioden, die den unterschiedlichen Zielübertragungsfehlerwahrscheinlichkeiten entsprechen, nicht gleich sind, durch eine der folgenden Weisen implementiert wird:

Konfigurieren einer einzelnen Periode von $N_p$ zum Übertragen von CSI, die B Arten von Zielübertragungsfehlerwahrscheinlichkeiten in verschiedenen Perioden entsprechen, wobei $m_j$ eine Anzahl von Übertragungen von CSI kennzeichnet, die einer Zielübertragungsfehlerwahrscheinlichkeit entsprechen, mit einem Index j in der Periode von $N_p$, wobei $j$ = 1,2,...,$B$ ; oder
einheitliches Konfigurieren von I Arten von Perioden zum Übertragen von CSI, die $B_i$ Arten von Zielübertragungsfehlerwahrscheinlichkeiten entsprechen, in einer gleichen Periode, wobei $B_i$ eine Gruppe von Zielübertragungsfehlerwahrscheinlichkeiten kennzeichnet, denen CSI, die in derselben Periode gemeldet wurden, unter den B Arten verschiedenen Zielübertragungsfehlerwahrscheinlichkeiten entspricht, wobei $1 \leq i \leq I$, $1 \leq I \leq B$ und $1 \leq B_i \leq$

*B* gelten, wobei für jede Gruppe $B_i$ die Periode von $N_p$ dafür konfiguriert ist, die CSI entsprechend den $B_i$ Arten von Zielübertragungsfehlerwahrscheinlichkeiten zu einer gleichen Periode von $N_p$ oder $B_i \cdot N_P$ zu übertragen, und wobei i und I beide positive ganze Zahlen sind.

4. Verfahren nach Anspruch 3, wobei die Periode von $N_p$ konfiguriert ist, um die CSI zu übertragen, die den B-Arten von Zielübertragungsfehlerwahrscheinlichkeiten in den verschiedenen Perioden $N_p/m_j$ entsprechen, wobei Versatzwerte, die den B Arten von Zielübertragungsfehlerwahrscheinlichkeiten entsprechen, gemäß einem konfigurierten Versatzwert von $N_{OFFSET,CQI}$, der konfigurierten Periode von $N_p$, und einer Summe M von Anzahlen von Übertragungen von gemeldeten CSI, die den B Arten von Zielübertragungsfehlerwahrscheinlichkeiten entsprechen, in der Periode $N_p$ bestimmt werden, wobei Versatzwerte, die den unterschiedlichen Zielübertragungsfehlerwahrscheinlichkeiten entsprechen, in einer Periode von $B \cdot N_P$ ungleich verteilt sind, wobei ein minimales Intervall zwischen Versatzwerten zum Melden der CSI, die den B Arten von Zielübertragungsfehlerwahrscheinlichkeiten entsprechen, $\left\lfloor N_p/M \right\rfloor$ ist, wobei M die Summe der Anzahlen von Übertragungen von gemeldeten CSI, die den B Arten von Zielübertragungsfehlerwahrscheinlichkeiten in der Periode von $N_p$ entsprechen, kennzeichnet, wobei M ≥ B und $i = 0,1,...,M-1$ gelten, und wobei einen Wert von i, der entspricht, von der Basisstation vordefiniert oder konfiguriert ist.

5. Verfahren nach Anspruch 1, wobei, wenn das Endgerät die CSI aperiodisch an die Basisstation meldet, eine Weise zum Bestimmen der Zielübertragungsfehlerwahrscheinlichkeit, die dem CQI entspricht, mindestens eine der Folgenden umfasst:

Empfangen der Zielübertragungsfehlerwahrscheinlichkeit, die dem gemeldeten CQI entspricht, der durch die Basisstation angezeigt wird;
Anzeigen der Zielübertragungsfehlerwahrscheinlichkeit, die dem gemeldeten CQI entspricht, durch das Endgerät; oder
Bestimmen der Zielübertragungsfehlerwahrscheinlichkeit, die dem gemeldeten CQI entspricht, gemäß einer impliziten Regel;
wobei die implizite Regel mindestens eine der Folgenden umfasst:

Bestimmen der Zielübertragungsfehlerwahrscheinlichkeit, die dem gemeldeten CQI entspricht, gemäß der Übertragungszeit des CQI;
Melden von CQI, die verschiedenen Zielübertragungsfehlerwahrscheinlichkeiten entsprechen, durch das Endgerät durch Abfragen; oder
Melden von nur CQI, der einer Zielübertragungsfehlerwahrscheinlichkeit entspricht, die kleiner als ein Referenzwert ist, wenn das Endgerät einen Auslöser für einen aperiodischen CQI empfängt, wobei ein Wert der Zielübertragungsfehlerwahrscheinlichkeit, der kleiner als der Referenzwert ist, ein fester Wert ist oder durch die Basisstation konfiguriert ist.

6. Verfahren nach Anspruch 5, wobei das Anzeigen der Zielübertragungsfehlerwahrscheinlichkeit, die dem gemeldeten CQI entspricht, durch das Endgerät eines der Folgenden umfasst:

Anzeigen durch das Endgerät, dass die Zielübertragungsfehlerwahrscheinlichkeit gemeinsam mit dem CQI codiert wird, wobei, nachdem Bits der Zielübertragungsfehlerwahrscheinlichkeit und des CQI verkettet sind, die verketteten Bits auf eine Position des CQI in einem gemeinsam genutzten physikalischen Uplink-Kanal (PUSCH) gemäß einer Codierungs-, Modulations- und Abbildungsregel des CQIs abgebildet werden; oder
Anzeigen durch das Endgerät, dass die Zielübertragungsfehlerwahrscheinlichkeit unabhängig codiert ist, wobei eine Abbildungsweise in dem PUSCH eine der Folgenden umfasst: Abbilden auf eine benachbarte Position nach dem CQI, Abbilden auf zwei Seiten eines Rangindikators (RI), Abbilden von einer höchsten Frequenzbereichsposition des PUSCHs in einer Art von Zeitdomäne, die von einer Frequenzdomäne gefolgt ist.

7. Informationsübertragungsverfahren, umfassend:

Empfangen von Kanalzustandsinformationen (CSI), die periodisch und/oder aperiodisch von einem Endgerät für eine Basisstation gemeldet werden, durch die Basisstation, so dass die Basisstation einen Übertragungsprozess einer hybriden automatischen Wiederholungsaufforderung (HARQ) gemäß einer Zielübertragungsfehlerwahrscheinlichkeit, die einem Kanalqualitätsindikator (CQI) entspricht, für die CSI-Meldung durchführt, wobei CQI, die verschiedenen Zielübertragungsfehlerwahrscheinlichkeiten entsprechen, zu unterschiedlichen Zeiten gemeldet werden; und

Anzeigen der Zielübertragungsfehlerwahrscheinlichkeit, die dem gemeldeten CQI entspricht, durch die Basisstation an das Endgerät.

8. Verfahren nach Anspruch 7, wobei das Anzeigen der Zielübertragungsfehlerwahrscheinlichkeit, die dem gemeldeten CQI entspricht, durch die Basisstation an das Endgerät mindestens eines der Folgenden umfasst:

Anzeigen durch die Basisstation, ob das Endgerät den CQI und die Zielübertragungsfehlerwahrscheinlichkeit, die dem gemeldeten CQI entspricht, durch gemeinsames Codieren eines Auslösers eines aperiodischen CQI und eines Werts einer entsprechenden Zielübertragungsfehlerwahrscheinlichkeit in Downlink-Steuerinformationen (DCI) meldet;
Anzeigen des Wertes der entsprechenden Zielübertragungsfehlerwahrscheinlichkeit durch die Basisstation, wenn der aperiodische CQI ausgelöst wird, und der entsprechenden Zielübertragungsfehlerwahrscheinlichkeit, wenn das Endgerät den aperiodischen CQI durch ein Bitfeld in der DCI oder ein Informationsfeld in Funkressourcensteuerung (RRC) meldet; oder
Anzeigen des Werts der entsprechenden Zielübertragungsfehlerwahrscheinlichkeit durch die Basisstation, wenn der aperiodische CQI durch 1 Bit in der DCI ausgelöst wird, und Anzeigen, ob die entsprechende Zielübertragungsfehlerwahrscheinlichkeit, wenn das Endgerät den aperiodischen CQI meldet, ein Referenzwert oder ein unterer Zielübertragungsfehlerwahrscheinlichkeitswert ist, wobei der untere Zielübertragungsfehlerwahrscheinlichkeitswert kleiner als eine Blockfehlerrate (BELR) gleich 10% ist und als einer der folgenden Werte bestimmt wird : einem festen Wert, einem vordefinierten Wert oder einem über eine Signalisierung höherer Schicht konfigurierten Wert.

9. Informationsübertragungsvorrichtung, umfassend:
ein Meldemodul (20), das dazu eingerichtet ist, Kanalzustandsinformationen (CSI), periodisch und/oder aperiodisch an eine Basisstation zu melden, so dass die Basisstation einen Übertragungsprozess einer hybriden automatischen Wiederholungsaufforderung (HARQ) gemäß einer Zielübertragungsfehlerwahrscheinlichkeit, die einem Kanalqualitätsindikator CQI entspricht, für die CSI-Meldung durchführt, wobei CQI, die verschiedenen Zielübertragungsfehlerwahrscheinlichkeiten entsprechen, zu unterschiedlichen Zeiten gemeldet werden.

10. Informationsübertragungsvorrichtung, umfassend:

ein Empfangsmodul, das konfiguriert ist, Kanalzustandsinformationen (CSI) zu empfangen, die periodisch und/oder aperiodisch von einem Endgerät für die Basisstation gemeldet werden, so dass die Basisstation einen Übertragungsprozess einer hybriden automatischen Wiederholungsaufforderung (HARQ) gemäß einer Zielübertragungsfehlerwahrscheinlichkeit, die einem Kanalqualitätsindikator CQI entspricht, für die CSI-Meldung durchführt, wobei CQI, die verschiedenen Zielübertragungsfehlerwahrscheinlichkeiten entsprechen, zu unterschiedlichen Zeiten gemeldet werden; und
ein Anzeigemodul, das konfiguriert ist, um die Zielübertragungsfehlerwahrscheinlichkeit, die dem gemeldeten CQI entspricht, an das Endgeräts anzuzeigen.

11. Speichermedium, das konfiguriert ist, um computerausführbare Anweisungen zum Ausführen des Informationsübertragungsverfahrens nach einem der Ansprüche 1 bis 8 zu speichern.

**Revendications**

1. Procédé de transmission d'informations, comprenant :
rapporter (S102) de manière périodique et/ou apériodique, par un terminal, une information d'état de canal, CSI, à une station de base pour que la station de base effectue un processus de transmission de Demande de Répétition Automatique Hybride, HARQ, en fonction d'une probabilité d'erreur de transmission cible correspondant à un indicateur de qualité de canal, CQI, pour le rapport CSI, dans lequel des CQIs, correspondant à différentes probabilités d'erreur de transmission cible, sont rapportés à moments différents.

2. Procédé selon la revendication 1, dans lequel, à condition que le terminal rapporte de manière périodique la CSI à la station de base, une manière de détermination de périodes de transmission CSI correspondant à différentes probabilités d'erreur de transmission cible comprend au moins l'une des suivantes :

configuration indépendante dans laquelle les périodes de transmission CSI correspondant aux différentes probabilités d'erreur de transmission cible sont déterminées indépendamment en fonction des configurations ; ou configuration uniforme dans laquelle les périodes de transmission CSI correspondant aux différentes probabilités d'erreur de transmission cible ne sont pas les mêmes.

3. Procédé selon la revendication 2, dans lequel la configuration uniforme dans laquelle les périodes de transmission CSI correspondant aux différentes probabilités d'erreur de transmission cible ne sont pas les mêmes est mise en œuvre de la manière suivante :

configurer une seule période de $N_p$ pour transmettre CSI correspondant à B types de probabilités d'erreur de transmission cible pendant différentes périodes de $N_p/m_j$, où $m_j$ désigne un nombre de transmissions de CSI correspondant à une probabilité d'erreur de transmission cible avec un indice j pendant la période de $N_p$, et $j = 1,2,...,B$ ; ou

configurer de manière uniforme I types de périodes pour transmettre CSI correspondant aux $B_i$ types de probabilités d'erreur de transmission cible pendant une même période, où $B_i$ désigne un groupe de probabilités d'erreur de transmission cible auquel CSI rapporté pendant la même période correspond parmi les B types de différentes probabilités d'erreur de transmission cible, où $1 \leq i \leq I$, $1 \leq I \leq B$, $1 \leq B_i \leq B$, pour chaque groupe $B_i$, la période de $N_p$ est configurée pour transmettre la CSI correspondant aux $B_i$ types de probabilités d'erreur de transmission cible pendant une même période de $N_p$ où $B_i \cdot N_P$, et i et I sont tous deux des entiers positifs.

4. Procédé selon la revendication 3, dans lequel à condition que la période de $N_p$ est configurée pour transmettre la CSI correspondant aux B types de probabilités d'erreur de transmission cible pendant différentes périodes $N_p/m_j$, des valeurs de décalage correspondant aux B types de probabilités d'erreur de transmission cible sont déterminées en fonction d'une valeur de décalage configurée de $N_{OFFSET,CQI}$, la période configurée de $N_p$, et une somme M de nombres de transmissions de CSI rapportés correspondant aux B types de probabilités d'erreur de transmission cible pendant la période $N_p$, des valeurs de décalage correspondant aux différentes probabilités d'erreur de transmission cible sont inégalement réparties pendant une période de $B \cdot N_P$, et un intervalle minimal entre des valeurs de décalage pour rapporter la CSI correspondant aux B types de probabilités d'erreur de transmission cible est $\left\lfloor N_p/M \right\rfloor$, où M désigne la somme de nombres de transmissions de CSI rapportées correspondant aux B types de probabilités d'erreur de transmission cible pendant la période de $N_p$, $M \geq B$, $i = 0,1,...,M-1$, et une valeur de i correspondant à $m_j$ est prédéfinie ou configurée par la station de base.

5. Procédé selon la revendication 1, dans lequel, à condition que le terminal rapporte de manière apériodique la CSI à la station de base, une manière de détermination des probabilités d'erreur de transmission cible correspondant au CQI comprend au moins l'une des suivantes :

recevoir la probabilité d'erreur de transmission cible correspondant au CQI rapporté qui est indiqué par la station de base ;
indiquer, par le terminal, la probabilité d'erreur de transmission cible correspondant au CQI rapporté ; ou
déterminer la probabilité d'erreur de transmission cible correspondant au CQI rapporté selon une règle implicite ;
dans laquelle la règle implicite comprend au moins l'une des suivantes :

déterminer la probabilité d'erreur de transmission cible correspondant au CQI rapporté en fonction d'un temps de transmission du CQI ;
rapporter, par le terminal, des CQIs correspondant à différentes probabilités d'erreur de transmission cible sous forme d'interrogation ; ou
lorsque le terminal reçoit un déclencheur pour un CQI apériodique, ne rapporter qu'un CQI correspondant à une probabilité d'erreur de transmission cible inférieure à une valeur de référence, dans laquelle une valeur de la probabilité d'erreur de transmission cible inférieure à la valeur de référence est une valeur fixe ou configurée par la station de base.

6. Procédé selon la revendication 5, dans lequel l'indication, par le terminal, de la probabilité d'erreur de transmission cible correspondant au CQI rapporté comprend l'une des suivantes :

indiquer, par le terminal, que la probabilité d'erreur de transmission cible est codée conjointement avec le CQI, dans laquelle une fois que des bits de la probabilité d'erreur de transmission cible et du CQI sont concaténés, les bits concaténés sont mappés à une position du CQI dans un canal physique partagé de liaison montante, PUSCH, selon une règle de codage, de modulation et de mappage du CQI ; ou

indiquer, par le terminal, que la probabilité d'erreur de transmission cible est codée indépendamment, dans laquelle une manière de mappage dans le PUSCH comprend l'une des suivantes : mapper à une position adjacente après le CQI, mapper sur deux côtés d'un indicateur de rang, RI, mapper à partir d'une position de domaine de fréquence la plus élevée du PUSCH d'une manière de domaine temporel suivi d'un domaine de fréquence.

7.  Procédé de transmission d'informations, comprenant :

recevoir, par une station de base, une information d'état de canal, CSI, rapportée de manière périodique et/ou apériodique par un terminal pour que la station de base effectue un processus de transmission de Demande de Répétition Automatique Hybride, HARQ, en fonction d'une probabilité d'erreur de transmission cible correspondant à un indicateur de qualité de canal, CQI, pour le rapport CSI, dans lequel des CQIs, correspondant à différentes probabilités d'erreur de transmission cible, sont rapportés à moments différents ; et
indiquer, par la station de base, la probabilité d'erreur de transmission cible correspondant au CQI rapporté au terminal.

8.  Procédé selon la revendication 7, dans lequel l'indication, par la station de base, de la probabilité d'erreur de transmission cible correspondant au CQI rapporté au terminal comprend au moins une des suivantes :

indiquer, par la station de base, si le terminal rapporte le CQI et la probabilité d'erreur de transmission cible correspondant au CQI rapporté en codant conjointement un déclencheur d'un CQI apériodique et une valeur d'une probabilité d'erreur de transmission cible correspondante dans l'information de commande de liaison descendante, DCI ;
indiquer, par la station de base, la valeur de la probabilité d'erreur d'émission cible correspondante lorsque le CQI apériodique est déclenché et la probabilité d'erreur d'émission cible correspondante lorsque le terminal rapporte le CQI apériodique à travers un champ de bits dans le DCI ou un champ d'information dans la commande de ressource radioélectrique, RRC ; ou
indiquer, par la station de base, la valeur de la probabilité d'erreur de transmission cible correspondante lorsque le CQI apériodique est déclenché par 1 bit dans le CQI, et indiquer si la probabilité d'erreur de transmission cible correspondante lorsque le terminal rapporte le CQI apériodique est une valeur de référence ou une valeur inférieure de probabilité d'erreur de transmission cible, la valeur inférieure de probabilité d'erreur de transmission cible étant inférieure à un taux d'erreur de bloc, BELR, égal à 10 % et étant déterminé comme l'une parmi : une valeur fixe, une valeur prédéfinie ou une valeur configurée à travers la signalisation de couche supérieure.

9.  Dispositif de transmission d'informations, comprenant :
un module de rapport (20), qui est configuré pour rapporter de manière périodique et/ou apériodique une information d'état de canal, CSI, à une station de base pour que la station de base effectue un processus de transmission de Demande de Répétition Automatique Hybride, HARQ, en fonction d'une probabilité d'erreur de transmission cible correspondant à un indicateur de qualité de canal, CQI, pour le rapport CSI, dans lequel le CQI, correspondant à différentes probabilités d'erreur de transmission cible, sont rapportés à moments différents.

10. Dispositif de transmission d'informations, comprenant :

un module de réception, qui est configuré pour recevoir une information d'état de canal, CSI, rapportée de manière périodique et/ou apériodique par un terminal pour que la station de base effectue un processus de transmission de Demande de Répétition Automatique Hybride, HARQ, en fonction d'une probabilité d'erreur de transmission cible correspondant à un indicateur de qualité de canal, CQI, pour le rapport CSI, dans lequel le CQI, correspondant à différentes probabilités d'erreur de transmission cible, sont rapportés à moments différents ; et
un module d'indication, qui est configuré pour indiquer la probabilité d'erreur de transmission cible correspondant au CQI rapporté au terminal.

11. Support de stockage, qui est configuré pour stocker des instructions exécutables par ordinateur pour exécuter le procédé de transmission d'informations selon l'une quelconque des revendications 1 à 8.

A terminal periodically and/or aperiodically reports CSI to a base station, where target transmission error probabilities corresponding to the CSI reported at different time are not completely the same

S102

**FIG. 1**

Reporting module 20

Terminal

**FIG. 2**

**FIG. 3**

**FIG. 4**

**FIG. 5**

**FIG. 6**

Legend:
- □ PUSCH data
- ▨ PUSCH reference signal
- ⊟ CQI/PMI
- ⊞ ACK/NACK
- ▧ RI
- ⊠ BLER corresponding to the CQI

One sub-carrier

One sub-frame or TTI

**FIG. 7**

Legend:
- □ PUSCH data
- ▨ PUSCH reference signal
- ⊟ CQI/PMI
- ⊞ ACK/NACK
- ▧ RI
- ⊠ BLER corresponding to the CQI

One sub-carrier

One sub-frame or TTI

**FIG. 8**

Legend:
- □ PUSCH data
- ▨ PUSCH reference signal
- ⊟ CQI/PMI
- ⊞ ACK/NACK
- ▧ RI
- ⊠ BLER corresponding to the CQI

One sub-carrier

One sub-frame or TTI

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2587707 A1

**Non-patent literature cited in the description**

- **FUJITSU**. Scheduling and CQI feedback for URLLC. *3GPP DRAFT*, 13 November 2016